# EUROPÄISCHE PATENTANMELDUNG

(11) **EP 3 407 021 A1**
(43) Veröffentlichungstag der Anmeldung: **28.11.2018**
(21) Anmeldenummer: 18154943.7
(22) Anmeldetag: 02.02.2018
(51) Int. Cl.: G01C 21/36, G08G 1/0968

(54) **DARSTELLUNG EINER FAHRTROUTE DURCH EIN NAVIGATIONSSYSTEM**

(30) Priorität: 24.05.2017 DE 102017208867
(71) Anmelder: Bayerische Motoren Werke Aktiengesellschaft, 80809 München (DE)
(72) Erfinder: HAHN, Wolfgang, 85238 Petershausen (DE)

(57) **Zusammenfassung**

Die Erfindung betrifft insbesondere ein Verfahren zur Darstellung einer Fahrtroute durch ein Navigationssystem, insbesondere ein Navigationssystem eines zwei- oder vierrädrigen Kraftfahrzeugs, bei dem auf einem Display des Navigationssystems eine grafische Darstellung einer digitalisierten Karte und die bereits zurückgelegte Strecke der Fahrtroute dargestellt wird. Zur Bereitstellung eines verbesserten Verfahrens zur Darstellung einer Fahrtroute durch ein Navigationssystem wird erfindungsgemäß vorgeschlagen, dass bei unverändertem Maßstab der Darstellung mit dem Zurücklegen von Abschnitten der Fahrtroute die bereits zurückgelegten Abschnitte der Fahrtroute ganz oder teilweise ausgeblendet werden und weitere noch zurückzulegende Abschnitte der Fahrtroute, die vor der Ausblendung bereits zurückgelegter Abschnitte der Fahrtroute in der Darstellung fehlten, grafisch auf dem Display eingeblendet bzw. dargestellt werden.

## Beschreibung

Die Erfindung betrifft insbesondere ein Verfahren zur Darstellung einer Fahrtroute durch ein Navigationssystem, insbesondere ein Navigationssystem eines zwei- oder vierrädrigen Kraftfahrzeugs, bei dem auf einem Display des Navigationssystems eine grafische Darstellung einer digitalisierten Karte und die bereits zurückgelegte Strecke der Fahrtroute dargestellt wird, gemäß dem Oberbegriff des Anspruchs 1.

Aus der DE 10 2006 054 326 A1 ist ein Verfahren zur Darstellung von Routeninformationen für ein Navigationssystem bekannt, bei dem auf einem Display eine grafische Darstellung einer digitalisierten Karte angezeigt und die bereits zurückgelegte Strecke einer Fahrtroute hervorgehoben wird. Bei der Zurücklegung der Strecke werden Fahrgeschwindigkeiten erfasst und die Hervorhebung der zurückgelegten Strecke erfolgt in Abhängigkeit von den jeweils ermittelten Fahrgeschwindigkeiten.

Auf den Bildschirmen von bekannten Navigationssystemen wird bei der Routenführung angezeigt: ein Kartenausschnitt, die eigene Fahrzeugposition in dem Kartenausschnitt, den vom Navigationssystem berechneten Weg (farbig) sowie eventuell Zusatzinformationen wie Verkehrslage oder Wetter. Typische Bildschirme bzw. Monitore von Navigationssystemen haben heute ein Seitenverhältnis x:y mit x > y, zum Beispiel ein Seitenverhältnis von 4:3 oder 16:9. Die eigene Position wird dabei, unabhängig von der gewählten Darstellungsart, wie nordweisende Darstellung, in Fahrtrichtung weisende Darstellung, mittig in der Nähe oder im Kreuzungspunkt der Bildschirmdiagonalen angezeigt, einschließlich der zu fahrenden Route bis zum Bildschirmrand.

Wird die eigene Position in der Karte im oder beim Zentrum des Kartenausschnitts der bekannten Navigationssysteme angezeigt und würde man sich beispielsweise in Nord-Südrichtung bewegen, wäre in dieser Darstellung die bereits gefahrene Wegstrecke etwa gleich lang wie die noch zu fahrende Wegstrecke. Da die bereits gefahrene Wegstrecke im allgemeinen weniger interessant ist als die noch zu fahrende Wegstrecke bzw. als die Informationen entlang der noch zu fahrenden Wegstrecke, ist die noch zu fahrende Wegstrecke gegenüber der bereits gefahrenen Wegstrecke untergewichtet. Dieser Nachteil bzw. die Untergewichtung ist besonders groß, wenn der angezeigte Weg parallel zur kurzen Seite des Monitors des Navigationssystems verläuft.

Aufgabe der Erfindung ist insbesondere die Bereitstellung eines verbesserten Verfahrens zur Darstellung einer Fahrtroute durch ein Navigationssystem.

Diese Aufgabe wird insbesondere durch ein Verfahren nach dem unabhängigen Patentanspruch gelöst. Vorteilhafte Ausgestaltungen der Erfindung sind Gegenstand der abhängigen Patentansprüche.

Die Erfindung geht aus von einem Verfahren zur Darstellung einer Fahrtroute durch ein Navigationssystem, insbesondere ein Navigationssystem eines zwei- oder vierrädrigen Kraftfahrzeugs, bei dem auf einem Display des Navigationssystems eine grafische Darstellung einer digitalisierten Karte und die bereits zurückgelegte Strecke der Fahrtroute dargestellt wird.

Erfindungsgemäß ist vorgesehen, dass bei unverändertem Maßstab der Darstellung mit dem Zurücklegen von Abschnitten der Fahrtroute die bereits zurückgelegten Abschnitte der Fahrtroute ganz oder teilweise ausgeblendet werden und weitere noch zurückzulegende Abschnitte der Fahrtroute, die vor der Ausblendung bereits zurückgelegter Abschnitte der Fahrtroute in der Darstellung fehlten, grafisch auf dem Display eingeblendet bzw. dargestellt werden.

Durch die erfindungsgemäßen Maßnahmen wird die Aufgabe der Erfindung in besonders eleganter Art und Weise gelöst. Durch die erfindungsgemäße Darstellung des noch zu fahrenden Wegs durch verlängerte Abschnitte bzw. einen längeren Streckenabschnitt der Fahrtroute können innerhalb eines Darstellungsmaßstabs relevante Informationen, wie Topologie der Streckenführung und/oder vorausliegende Verkehrshindernisse, früher vom Fahrer wahrgenommen werden. Es muss dann eventuell nicht mehr auf einen größeren Maßstab zulasten der Detailauflösung der Darstellung gewechselt werden. Der Fahrer erhält eine bessere Voraussicht und kann sich früher auf sich ändernde Randbedingungen einstellen.

Bei einer bevorzugten Ausführungsform des erfindungsgemäßen Verfahrens ist vorgesehen, dass die auf dem Display dargestellte Anzahl der noch zu fahrenden Abschnitte entlang der Fahrtroute größer ist als die dargestellte Anzahl der bereits zurückgelegten Abschnitte entlang der Fahrtroute, wobei die Abschnitte jeweils hinsichtlich ihrer Länge identisch sind.

Das Verhältnis der gefahrenen Strecke zur noch zu fahrenden Strecke kann bei der Routenführung zugunsten der zu fahrenden Strecke gewichtet werden, wie zum Beispiel durch ein Verhältnis von 2 : 3 mit zwei Anteilen gefahrener Strecke und drei Anteilen noch zu fahrender Strecke. Damit würde die eigene Position immer in einer Monitorhälfte liegen. Dabei kann man das Verhältnis aus den realen, aus der digitalen Karte entnommenen Weglängen ermitteln und/oder aus der Länge der kürzeren Seite des Monitors. Kommen zusätzlich Ost-Westanteile an der Fahrtrichtung hinzu, kann die Optimierung der Darstellung der eigenen Position und damit das Längenverhältnis von gefahrener zur noch zu fahrenden Strecke in x- und y-Richtung optimiert werden. Das Verhältnis der Strecken kann dabei fest vorgegeben, dynamisch vom erfindungsgemäßen Verfahren angepasst oder auch durch den Fahrer wählbar eingestellt werden.

Entsprechend einer bevorzugten Weiterbildung des erfindungsgemäßen Verfahrens ist vorgesehen, dass das Verhältnis der dargestellten Anzahl noch zu fahrender Abschnitte der Fahrtroute zur dargestellten Anzahl bereits zurückgelegter Abschnitte der Fahrtroute deutlich größer als 1 ist, wie insbesondere ein Verhältnis von 3:2 oder 4:2 oder 5:2 ist.

Bei einer Ausgestaltung des erfindungsgemäßen Verfahrens ist vorgesehen, dass die auf dem Display dargestellte Anzahl der noch zu fahrenden Abschnitte entlang der Fahrtroute im Verhältnis zur dargestellten Anzahl der bereits zurückgelegten Abschnitte entlang der Fahrtroute, bei einer Fahrtroute in ausgeprägter Nord-SüdRichtung im Unterschied zu einer Fahrtroute, die weitgehend in Ost-West-Richtung verläuft, erhöht wird.

Bei einer bevorzugten Ausführungsform des erfindungsgemäßen Verfahrens ist vorgesehen, dass das Display derart gewählt wird, dass das Display eine größere Darstellungsbreite als Darstellungshöhe aufweist, wie insbesondere ein Seitenverhältnis von 4:3 oder 16:9.

Die Erfindung ermöglicht zudem die Bereitstellung eines Navigationssystems, insbesondere eines zwei- oder vierrädrigen Kraftfahrzeugs, bei dem das Navigationssystem ein erfindungsgemäßes Verfahren ausführt.

Weiter ermöglicht die Erfindung die Bereitstellung eines Kraftfahrzeugs mit einem Navigationssystem, insbesondere eines zwei- oder vierrädrigen Kraftfahrzeugs, bei dem das Navigationssystem ein erfindungsgemäßes Verfahren ausführt.

Schließlich ermöglicht die Erfindung ein Computerprogrammprodukt zur Steuerung mindestens eines Prozessors, insbesondere eines Prozessors des erfindungsgemäßen Navigationssystems, der den Ablauf mindestens eines Schritts eines erfindungsgemäßen Verfahrens bewirkt.

## Patentansprüche

1. Verfahren zur Darstellung einer Fahrtroute durch ein Navigationssystem, insbesondere ein Navigationssystem eines zwei- oder vierrädrigen Kraftfahrzeugs, bei dem auf einem Display des Navigationssystems eine grafische Darstellung einer digitalisierten Karte und die bereits zurückgelegte Strecke der Fahrtroute dargestellt wird, **dadurch gekennzeichnet, dass** bei unverändertem Maßstab der Darstellung mit dem Zurücklegen von Abschnitten der Fahrtroute die bereits zurückgelegten Abschnitte der Fahrtroute ganz oder teilweise ausgeblendet werden und weitere noch zurückzulegende Abschnitte der Fahrtroute, die vor der Ausblendung bereits zurückgelegter Abschnitte der Fahrtroute in der Darstellung fehlten, grafisch auf dem Display eingeblendet bzw. dargestellt werden.

2. Verfahren nach Anspruch 1, **dadurch gekennzeichnet, dass** die auf dem Display dargestellte Anzahl der noch zu fahrenden Abschnitte entlang der Fahrtroute größer ist als die dargestellte Anzahl der bereits zurückgelegten Abschnitte entlang der Fahrtroute, wobei sämtliche Abschnitte in ihrer Länge identisch sind.

3. Verfahren nach 2, **dadurch gekennzeichnet, dass** das Verhältnis der dargestellten Anzahl noch zu fahrender Abschnitte der Fahrtroute zur dargestellten Anzahl bereits zurückgelegter Abschnitte der Fahrtroute deutlich größer als 1 ist, wie insbesondere ein Verhältnis von 3:2, 4:2 oder 5:2 ist.

4. Verfahren nach einem der Ansprüche 1 bis 3, **dadurch gekennzeichnet, dass** die auf dem Display dargestellte Anzahl der noch zu fahrenden Abschnitte entlang der Fahrtroute im Verhältnis zur dargestellten Anzahl der bereits zurückgelegten Abschnitte entlang der Fahrtroute, bei einer Fahrtroute in ausgeprägter Nord-Süd-Richtung im Unterschied zu einer Fahrtroute, die weitgehend in Ost-West-Richtung verläuft, erhöht wird.

5. Verfahren nach Anspruch 4, **dadurch gekennzeichnet, dass** das Display eine größere Darstellungsbreite als Darstellungshöhe aufweist, wie insbesondere ein Seitenverhältnis von 4:3 oder 16:9.

6. Navigationssystem, insbesondere verbaut in einem zwei- oder vierrädrigen Kraftfahrzeug, **dadurch gekennzeichnet, dass** es ein Verfahren nach einem der vorstehenden Ansprüche ausführt.

7. Kraftfahrzeug, insbesondere ein zwei- oder vierrädriges Kraftfahrzeug, **dadurch gekennzeichnet, dass** es ein Navigationssystem nach Anspruch 6 aufweist.

8. Computerprogrammprodukt zur Steuerung mindestens eines Prozessors, insbesondere eines Prozessors des Navigationssystems nach Anspruch 6, der den Ablauf mindestens eines Schritts eines Verfahrens nach einem der vorstehenden Ansprüche bewirkt.
